# EUROPÄISCHE PATENTSCHRIFT

(11) **EP 2 205 407 B1**
(45) Veröffentlichungstag und Bekanntmachung des Hinweises auf die Patenterteilung: **25.01.2012**
(21) Anmeldenummer: 08837391.5
(22) Anmeldetag: 01.10.2008
(51) Int. Cl.: B25F 5/00, B25F 5/02, F16F 9/53, B25D 17/04

(54) **ZUSATZHANDGRIFFVORRICHTUNG**
AUXILIARY HANDLE DEVICE
SYSTÈME DE POIGNÉE AUXILIAIRE

(30) Priorität: 01.10.2007 DE 102007047077
(43) Veröffentlichungstag der Anmeldung: 14.07.2010
(73) Patentinhaber: Robert Bosch GmbH, 70442 Stuttgart (DE)
(72) Erfinder: EICHER, Roswitha, 70794 Filderstadt (DE); HEESS, Stefan, 70771 Leinfelden-Echterdingen (DE); MAUTE, Joerg, 71069 Sindelfingen (DE); ESENWEIN, Florian, 73066 Uhingen-Holzhausen (DE); EICHER, Bernhard, 70794 Filderstadt (DE); SCHULLER, Marcus, 72135 Dettenhausen (DE)
(86) Internationale Anmeldenummer: PCT/EP2008/063155
(87) Internationale Veröffentlichungsnummer: WO 2009/047185

(56) Entgegenhaltungen:
- EP-A- 1 219 858
- EP-A- 1 249 637
- WO-A-00/47862
- WO-A-01/55617
- WO-A-2008/037526
- DE-B3- 10 320 005

## Beschreibung

### Stand der Technik

Die Erfindung geht aus von einer Zusatzhandgriffvorrichtung nach dem Oberbegriff des Anspruchs 1.

Es ist bereits eine Zusatzhandgriffvorrichtung für eine Handwerkzeugmaschine mit einem Zusatzhandgriff und einer Dämpfungseinheit bekannt. Die Dämpfungseinheit weist zu einer Schwingungsdämpfung ein Dämpfungsmittel auf. Eine gattungsgemässe vorrichtung ist aus WO 00/47862 A1 bekannt.

### Vorteile der Erfindung

Die Erfindung geht aus von einer Zusatzhandgriffvorrichtung, insbesondere für eine Handwerkzeugmaschine, mit einem Zusatzhandgriff und einer Dämpfungseinheit mit zumindest einem Dämpfungsmittel.

Es wird vorgeschlagen, dass das Dämpfungsmittel zumindest teilweise von einem rheologischen Dämpfungsmittel gebildet ist. In diesem Zusammenhang soll unter einem "Zusatzhandgriff" ein Bereich und/oder ein Bauteil und/oder ein Element verstanden werden, der bzw. das zu einem Anlegen, insbesondere einem Umgreifen, durch eine Hand oder mehrere Hände eines Bedieners, zwecks einer Führung einer Handwerkzeugmaschine mittels der Zusatzhandgriffvorrichtung, vorgesehen ist und insbesondere neben einem weiteren Handgriff, insbesondere dem Haupthandgriff, zusätzlich an der Handwerkzeugmaschine anbringbar ist, wobei die Zusatzhandgriffvorrichtung seitlich an der Handwerkzeugmaschine angeordnet ist und/oder werkzeuglos von einem Bediener an der Handwerkzeugmaschine montiert bzw. demontiert werden kann und/oder in einem vorderen, werkzeugnahen Bereich der Handwerkzeugmaschine angeordnet ist und/oder der Zusatzhandgriff stabförmig ausgebildet ist. Des Weiteren soll unter einem "rheologischen Dämpfungsmittel" insbesondere ein Dämpfungsmittel verstanden werden, bei dem mittels eines Einwirkens von beispielsweise äußeren Kräften, wie insbesondere eine Scherkraft, ein Anlegen eines elektrischen Feldes und/oder eines magnetischen Feldes usw., eine unmittelbare Änderung einer inneren Struktur des Dämpfungsmittels bzw. eine Änderung einer Wechselwirkung von Dämpfungsmittelpartikeln untereinander erzielt werden kann. Die Änderung der inneren Struktur des Dämpfungsmittels bewirkt dabei vorzugsweise eine Änderung eines Fließverhaltens, wie insbesondere eine Änderung einer Viskosität, und beeinflusst damit eine Dämpfungskraft. Das Einwirken der äußeren Kräfte kann dabei manuell von einem Bediener gesteuert werden oder besonders vorteilhaft zumindest teilautomatisch über eine Steuer- oder Regeleinheit eingestellt werden. Durch die erfindungsgemäße Ausgestaltung kann eine vorteilhafte Dämpfung, insbesondere eine schnelle, vorzugsweise an ein Schwingungsverhalten der Handwerkzeugmaschine angepasste Variation einer Dämpfungseigenschaft des Zusatzhandgriffs, insbesondere eines Griffbereichs, und damit ein hoher Bedienkomfort für einen Bediener erreicht werden. Zusätzlich ist die Dämpfungseigenschaft des rheologischen Dämpfungsmittels vorteilhafterweise innerhalb eines Kennfelds parametrisierbar und somit innerhalb eines weiten Bereichs in seiner Dämpfungseigenschaft variierbar. Die erfindungsgemäße Zusatzhandgriffvorrichtung ist grundsätzlich in Verbindung mit allen, dem Fachmann als sinnvoll erscheinenden Handwerkzeugmaschinen einsetzbar, bei denen insbesondere eine Führung von Handwerkzeugmaschinen mittels des Zusatzhandgriffs für einen Bediener erleichtert wird. Aufgrund ihrer Dämpfungseigenschaft ist die Zusatzhandgriffvorrichtung in Verbindung mit einer Winkelschleifmaschine besonders vorteilhaft.

Weiterhin wird vorgeschlagen, dass das rheologische Dämpfungsmittel zumindest teilweise von einem magnetorheologischen Dämpfungsmittel gebildet ist. Hierdurch kann besonders schnell und effektiv eine Dämpfungseigenschaft des Dämpfungsmittels beeinflusst werden, indem durch Änderung eines äußeren Parameters, insbesondere einer magnetischen Kraft und/oder eines elektrischen Stroms, eine sofortige Änderung eines inneren Parameters, insbesondere eines dämpfungsmittelspezifischen Parameters, wie vorzugsweise einer Fließeigenschaft bzw. eine Viskosität, erreicht werden kann. Eine Änderung eines Dämpfungsparameters kann bis zu 1000 Mal pro Sekunde erfolgen. Vorzugsweise ist das rheologische Dämpfungsmittel zumindest teilweise von einer magnetorheologischen Dämpfungsflüssigkeit gebildet, wie beispielsweise von einer Suspension, insbesondere von einem Öl mit darin enthaltenen Polyurethanmolekülen. Grundsätzlich sind jedoch auch weitere, dem Fachmann als sinnvoll erscheinende Materialien, wie beispielsweise ein Gel usw. in einer alternativen Ausgestaltung der Erfindung jederzeit denkbar.

Es wird ferner vorgeschlagen, dass die Dämpfungseinheit zumindest ein Magnetisierungselement aufweist, wodurch vorteilhaft ein Magnetfeld in dem magnetorheologischen Dämpfungsmittel erzeugt werden kann. Dabei soll unter einem "Magnetisierungselement" insbesondere ein Element verstanden werden, das zu einer Erzeugung eines magnetischen Feldes innerhalb des magnetorheologischen Dämpfungsmittels vorgesehen ist. Eine konstruktiv einfache Erzeugung eines Magnetfelds kann erreicht werden, wenn das Magnetisierungselement zumindest teilweise von einer Magnetspule gebildet ist. Grundsätzlich ist es jedoch auch denkbar, dass das Magnetisierungselement außerhalb der Zusatzhandgriffvorrichtung angeordnet ist, wie beispielsweise in der Handwerkzeugmaschine.

Umgibt das Magnetisierungselement zumindest teilweise das rheologische Dämpfungsmittel, kann eine insbesondere gleichmäßige Feldstärke eines im rheologischen Dämpfungsmittel erzeugten Magnetfelds erreicht und damit vorteilhaft ein einheitlicher Dämpfungsparameter eingestellt werden.

In einer weiteren Ausgestaltung der Erfindung wird vorgeschlagen, dass die Dämpfungseinheit eine Sensoreinheit aufweist, die zu einer Erfassung einer Schwingungskenngröße der Handwerkzeugmaschine vorgesehen ist, wodurch eine Anpassung und/oder eine Einstellung eines Dämpfungsparameters des magnetorheologischen Dämpfungsmittels an ein momentanes Schwingungsverhalten der Handwerkzeugmaschine vorteilhaft erreicht werden kann. Unter "vorgesehen" soll insbesondere speziell ausgestattet und/oder ausgelegt verstanden werden. Des Weiteren soll unter einer "Sensoreinheit" dabei insbesondere eine Einheit verstanden werden, die sowohl zu einem Sensieren einer Kenngröße als auch zu einem Auswerten der Kenngröße und einem anschließenden Anpassen bzw. Einstellen eines Parameters vorgesehen sein kann.

Weist zudem die Sensoreinheit zumindest einen Sensor auf, der an einem Befestigungselement zu einem Befestigen mit der Handwerkzeugmaschine angeordnet ist, kann eine Schwingungskenngrö-βe besonders nah an der Handwerkzeugmaschine und damit besonders exakt erfasst werden.

Ferner wird vorgeschlagen, dass die Zusatzhandgriffvorrichtung zumindest ein Einstellelement aufweist, das zumindest teilweise zu einer Einstellung einer Dämpfungskenngröße der Dämpfungseinheit vorgesehen ist, wodurch eine effektive und insbesondere zumindest teilweise automatische Einstellung bzw. Anpassung der Dämpfungskenngröße der Dämpfungseinheit, insbesondere des magnetorheologischen Dämpfungsmittels, an eine Schwingungskenngröße erreicht werden kann. Besonders vorteilhaft kann dies erreicht werden, wenn die Einstelleinheit zu einer zumindest teilweisen automatischen Anpassung eines Magnetfelds zumindest eines Magnetisierungselements an eine Schwingungskenngröße vorgesehen ist.

In einer vorteilhaften Weiterbildung der Erfindung wird vorgeschlagen, dass die Dämpfungseinheit zumindest ein Schwingungselement aufweist, wodurch vorteilhaft eine zu einer Ausgangsschwingung der Handwerkzeugmaschine schwingungsdämpfende Gegenschwingung mittels des Schwingungselements erzeugt werden kann. Besonders vorteilhaft kann dies erreicht werden, wenn das Schwingungselement von einem Tilgermassenelement gebildet ist. In diesem Zusammenhang soll unter einem "Tilgermassenelement" insbesondere ein Element verstanden werden, das zumindest innerhalb eines vorgesehenen Frequenzbereichs einer Ausgangsschwingung zu einer Gegenschwingung angeregt wird, die der Ausgangsschwingung zumindest teilweise entgegenwirkt und somit zu einer Reduzierung von Schwingungen beiträgt.

Ist zudem das Schwingungselement innerhalb des rheologischen Dämpfungsmittels angeordnet, kann die Gegenschwingung des Schwingungselements, insbesondere ein Schwingungsparameter, wie beispielsweise eine Schwingungsamplitude, besonders schnell und effektiv an ein Schwingungsverhalten der Handwerkzeugmaschine angepasst werden.

Des Weiteren wird vorgeschlagen, dass die Dämpfungseinheit zumindest ein Lagermittel aufweist, das zu einer beweglichen Lagerung des Schwingungselements in zumindest eine Richtung vorgesehen ist, wodurch vorteilhaft eine Gegenschwingung entlang einer Vorzugsrichtung, insbesondere einer axialen Richtung, einer Schwingungsübertragung von der Handwerkzeugmaschine auf die Zusatzhandgriffvorrichtung erreicht werden kann.

Weist die Dämpfungseinheit zumindest ein Federelement auf, das zu einer Dämpfung einer Bewegung des Schwingungselements in zumindest eine Richtung vorgesehen ist, kann eine zusätzliche Schwingungsdämpfung mittels des Federelements und eine vorteilhafte Rückführung des Schweingungselements in eine Ausgangsposition bzw. in eine Ruheposition des Schwingungselements erreicht werden. Das Federelement ist vorzugsweise von einer Schraubenfeder gebildet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmä-βigerweise auch einzeln betrachten und zu sinnvollen weiteren Kombinationen zusammenfassen.

Es zeigen:
- Fig. 1: eine Handwerkzeugmaschine mit einer erfindungsgemäßen Zusatzhandgriffvorrichtung in einer schematischen Darstellung und
- Fig. 2: die Zusatzhandgriffvorrichtung mit einer Dämpfungseinheit in einer perspektivischen Schnittdarstellung.

### Beschreibung des Ausführungsbeispiels

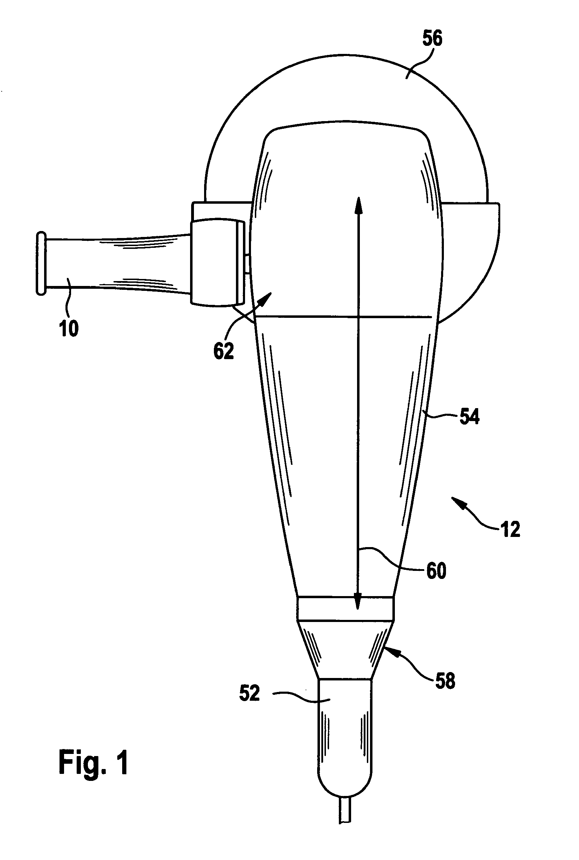

In Figur 1 ist eine von einer Winkelschleifmaschine ausgebildete Handwerkzeugmaschine 12 in einer Ansicht von oben dargestellt. Die Winkelschleifmaschine umfasst ein Gehäuse 54 und einen im Gehäuse 54 integrierten Haupthandgriff 52. Der Haupthandgriff 52 erstreckt sich an einer einem von einer Trennscheibe gebildeten Werkzeug 56 abgewandten Seite 58 in Richtung einer Längsrichtung 60 der Winkelschleifmaschine. An einem vorderen, werkzeugnahen Bereich 62 der Winkelschleifmaschine ist eine Zusatzhandgriffvorrichtung 10 angeordnet, die sich quer zur Längsrichtung 60 der Winkelschleifmaschine erstreckt.

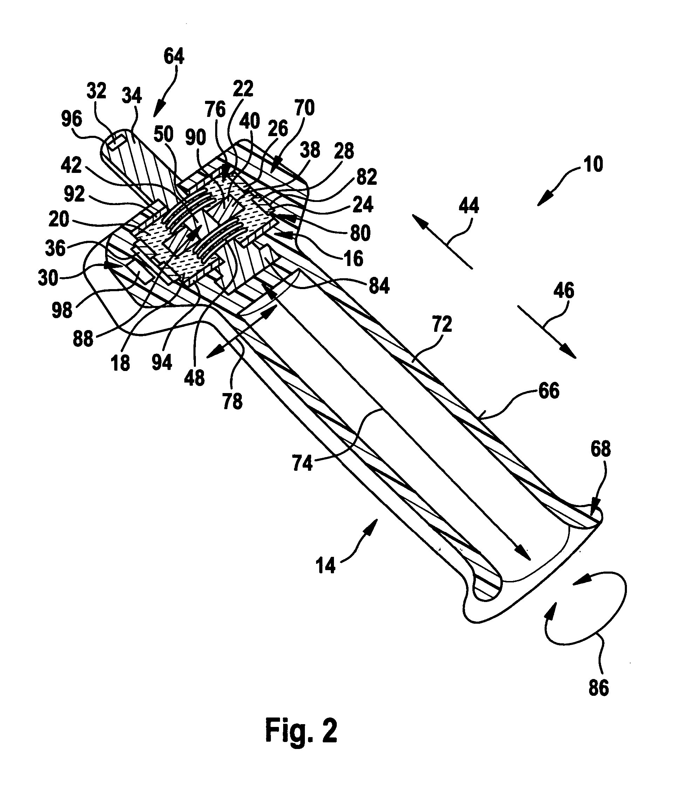

In Figur 2 ist die Zusatzhandgriffvorrichtung 10 mit einem Zusatzhandgriff 14, einer Befestigungseinheit 64 zu einer Befestigung mit der Handwerkzeugmaschine 12 und einer Dämpfungseinheit 16 dargestellt. Der Zusatzhandgriff 14 weist eine Griffhülse 72 mit einem Griffbereich 66, der zu einem Anlegen einer Hand eines Bedieners vorgesehen ist, und zwei Griffendbereiche 68, 70 auf, die den Griffbereich 66 in eine axiale Richtung 44, 46 begrenzen. Die axiale Richtung 44, 46 ist dabei parallel zu einer Haupterstreckungsrichtung 74 der Zusatzhandgriffvorrichtung 10 ausgerichtet. Derder Befestigungseinheit 64 zugewandte Griffendbereich 70 weist einen zylinderförmigen Aufnahmebereich 76 auf, in dem zumindest teilweise die Dämpfungseinheit 16 angeordnet ist. Die Dämpfungseinheit 16 weist ein Dämpfungsmittel 18 auf, das von einer von einem magnetorheologischen Dämpfungsmittel 18 gebildeten Dämpfungsflüssigkeit 20 gebildet ist und innerhalb des Aufnahmebereichs 76 angeordnet ist. Zu einer Einstellung eines Dämpfungsparameters der magnetorheologischen Dämpfungsflüssigkeit 20 weist die Dämpfungseinheit 16 zwei Magnetisierungselemente 22, 24 auf, die jeweils von einer Magnetspule 26, 28 gebildet sind. Die beiden Magnetspulen 26, 28 sind in einer radialen Richtung 78, die senkrecht zur axialen Richtung 44, 46 ausgerichtet ist, nach außen in einem Randbereich 80 des Aufnahmebereichs 76 an einer Wandung 82 des Aufnahmebereichs 76 bzw. an dem Griffendbereich 70 angeordnet, so dass die Magnetspulen 26, 28 die magnetorheologische Dämpfungsflüssigkeit 20 in radialer Richtung 78 umgeben.

Des Weiteren weist die Dämpfungseinheit 16 ein von einem Tilgermassenelement 40 gebildetes Schwingungselement 38 auf, das innerhalb der magnetorheologischen Dämpfungsflüssigkeit 20 bewegbar gelagert ist. Hierzu weist die Dämpfungseinheit 16 ein Lagermittel 42 auf, das einstückig mit der Befestigungseinheit 64 bzw. einem Befestigungselement 34 der Befestigungseinheit 64 ausgebildet ist. Die Befestigungseinheit 64 weist neben dem Befestigungselement 34, das zu einer Befestigung der Zusatzhandgriffvorrichtung 10 mit der Handwerkzeugmaschine 12 vorgesehen ist, ein Grundelement 84 auf. Das Grundelement 84 ist in der axialen Richtung 46 von dem Befestigungselement 34 in Richtung des Griffbereichs 66 nach dem Aufnahmebereich 76 angeordnet und weist in der radialen Richtung 78 eine größere Quererstreckung auf als eine Quererstreckung des Befestigungselements 34 bzw. des Lagermittels 42 auf, so dass die Befestigungseinheit 64 fest mit dem Griffendbereich 70 verbunden ist.

Das Lagermittel 42 erstreckt sich in axialer Richtung 46 durch den Aufnahmebereich 76 und ist in radialer Richtung 78 mittig innerhalb des Aufnahmebereichs 76 bzw. des Griffendbereichs 70 angeordnet. Das Tilgermassenelement 40 ist in eine Umfangsrichtung 86 hülsenförmig direkt um das Lagermittel 42 angeordnet, wobei das Tilgermassenelement 40 in einem entlang der axialen Richtung 44, 46 mittleren Teilbereich 88 eine scheibenförmige Ausformung 90 aufweist. Mittels des Lagermittels 42 ist das Tilgermassenelement 40 in der axialen Richtung 44, 46 bewegbar gelagert. Zudem sind in der Umfangsrichtung 86 um das Lagermittel 42 zwei von jeweils einer Schraubenfeder gebildete Federelemente 48, 50 angeordnet. Die beiden Federelemente 48, 50 sind in axialer Richtung 44, 46 an unterschiedlichen Seiten des Tilgermassenelements 40 zwischen dem Tilgermassenelement 40 und jeweils einer den Aufnahmebereich 76 begrenzenden Wandung 92, 94 der Dämpfungseinheit 16 angeordnet. Die beiden Federelemente 48, 50 sind zu einer Dämpfung einer Schwingungsbewegung des Tilgermassenelements 40 in der axialen Richtung 48, 50 und zu einer Rückführung des Tilgermassenelements 40 in eine Ausgangsposition bzw. eine Ruheposition vorgesehen.

Zu einer Einstellung eines Dämpfungsparameters weist die Dämpfungseinheit 16 eine Sensoreinheit 30 mit einem Sensor 32 und einem Einstellelement 36 auf. Mittels des Sensors 32, der an einem dem Griffbereich 66 abgewandten Ende 96 des Befestigungselements 34 angeordnet ist, wird im Betrieb der Zusatzhandgriffvorrichtung 10 bzw. der Handwerkzeugmaschine 12 eine Schwingungskenngröße einer von der Handwerkzeugmaschine 12 erzeugten Schwingung erfasst. Mittels dieser Schwingungskenngröße wird von der Sensoreinheit 30 eine Dämpfungskenngröße ermittelt, wobei die Sensoreinheit 30 hierzu eine Recheneinheit 98 aufweist. Diese kann beispielsweise anhand einer gespeicherten Kennlinie die Dämpfungskenngröße ermitteln, wobei die Kennlinie innerhalb eines nicht dargestellten Speichers der Sensoreinheit 30 gespeichert ist. Durch das Einstellelement 36 wird mittels der ermittelten Dämpfungskenngröße ein Magnetfeld in den beiden Magnetspulen 26, 28 erzeugt und/oder geändert und damit das Magnetfeld bzw. eine magnetische Kraft innerhalb der magnetotheologischen Dämpfungsflüssigkeit 20 erzeugt und/oder geändert. Eine Änderung des Magnetfelds kann beispielsweise durch eine Änderung eines durch die Magnetspulen 26, 28 fließenden Stroms bewirkt werden. Zudem bewirkt eine Änderung des Magnetfelds in der magnetorheologischen Dämpfungsflüssigkeit 20 eine Änderung ihres Fließverhaltens bzw. ihrer Viskosität, indem beispielsweise magnetisierbare Partikel der magnetorheologischen Dämpfungsflüssigkeit 20 ihre Ausrichtung ändern. Ein Austausch der Kenngrößen und/oder von Dämpfungsdaten innerhalb der Sensoreinheit 30 erfolgt dabei über eine nicht näher dargestellte Datenleitung. Eine Energieversorgung der Sensoreinheit 30 mit elektrischer Energie erfolgt durch die Handwerkzeugmaschine 12 mittels einer nicht näher dargestellten elektrischen Leitung. Grundsätzlich ist es auch denkbar, dass die Sensoreinheit 30 über eine eigene Energieversorgung, wie beispielsweise über eine Batterie, verfügt.

Im Betrieb der Handwerkzeugmaschine 12 werden Schwingungen erzeugt, die über die Befestigungseinheit 64 auf die Zusatzhandgriffvorrichtung 10 übertragen werden. Die Dämpfungseinheit 16 ist entlang eines Wegs einer Schwingungsausbreitung innerhalb der Zusatzhandgriffvorrichtung 10 dem Zusatzhandgriff 14, insbesondere dessen Griffbereich 66, vorgeschaltet, so dass der Griffbereich 66 des Zusatzhandgriffs 14 möglichst schwingungsentkoppelt gegenüber der Handwerkzeugmaschine 12 ist. Die von der Handwerkzeugmaschine 12 erzeugten Schwingungen regen das Tilgermassenelement 40 der Dämpfungseinheit 16 zu Gegenschwingungen an, die den Schwingungen der Handwerkzeugmaschine 12 entgegenwirken. Zudem erfolgt eine Schwingungsdämpfung innerhalb der Dämpfungseinheit 16 nach einem Prinzip eines Stoßdämpfers. Durch eine Schwingungsbewegung des Tilgermassenelements 40 wird die magnetorheologische Dämpfungsflüssigkeit 20 in einer Bewegungsrichtung des Tilgermassenelements 40 verdrängt und muss entgegen der Bewegungsrichtung des Tilgermassenelements 40 an diesem vorbei strömen. Des Weiteren wird mittels der Sensoreinheit 30 ein Magnetfeld innerhalb der magnetorheologischen Dämpfungsflüssigkeit 20 eingestellt, wobei deren Fließverhalten bzw. deren Viskosität von der momentanen, sensierten Schwingungskenngröße abhängt und somit eine möglichst effektive Schwingungsdämpfung mittels der Dämpfungseinheit 16 im Betrieb der Handwerkzeugmaschine 12 erreichbar ist.

## Patentansprüche

1. Zusatzhandgriffvorrichtung, insbesondere für eine Handwerkzeugmaschine (12), mit einem Zusatzhandgriff (14) und einer Dämpfungseinheit (16) mit zumindest einem Dämpfungsmittel (18), wobei das Dämpfungsmittel (18) zumindest teilweise von einem rheologischen Dämpfungsmittel (18) gebildet ist und wobei die Dämpfungseinheit (16) zumindest ein Magnetisierungselement (22, 24) aufweist, **dadurch gekennzeichnet, dass** ein Einstellelement (36) zu einer zumindest teilweisen automatischen Anpassung eines. Magnetfelds des zumindest einen Magnetisierungselements (22, 24) an eine Schwingung kenngröße vorgesehen ist.

2. Zusatzhandgriffvorrichtung nach Anspruch 1, **dadurch gekennzeichnet, dass** das rheologische Dämpfungsmittel (18) zumindest teilweise von einem magnetorheologischen Dämpfungsmittel (18) gebildet ist.

3. Zusatzhandgriffvorrichtung nach einem der vorhergehenden Ansprüche, **dadurch gekennzeichnet, dass** das rheologische Dämpfungsmittel (18) zumindest teilweise von einer magnetorheologischen Dämpfungsflüssigkeit (20) gebildet ist.

4. Zusatzhandgriffvorrichtung nach einem der vorhergehenden Ansprüche, **dadurch gekennzeichnet, dass** das Magnetisierungselement (22, 24) zumindest teilweise von einer Magnetspule (26, 28) gebildet ist

5. Zusatzhandgriffvorrichtung nach einem der vorhergehenden Ansprüche, **dadurch gekennzeichnet, dass** das Magnetisierungselement (22, 24) zumindest teilweise das rheologische Dämpfungsmittel (18) umgibt.

6. Händwerkzeugmaschine, insbesondere eine Winkelschleifmaschine, mit einem Haupthandgriff (52) und einer Zusatzhandgriffvorrichtung (10) nach einem der vorhergehenden Ansprüche.

## Claims

1. Auxiliary handle device, in particular for a portable power tool (12), comprising an auxiliary handle (14) and a damping unit (16) having at least one damping medium (18), wherein the damping medium (18) is formed at least partly by a rheological damping medium (18) and wherein the damping unit (16) has at least one magnetization element (22, 24), **characterized in that** a setting element (36) for at least partly automatically adapting a magnetic field of the at least one magnetization element (22, 24) to a vibration parameter is provided.

2. Auxiliary handle device according to Claim 1, **characterized in that** the rheological damping medium (18) is formed at least partly by a magnetorheological damping medium (18).

3. Auxiliary handle device according to either of the preceding claims, **characterized in that** the rheological damping medium (18) is formed at least partly by a magnetorheological damping fluid (20).

4. Auxiliary handle device according to one of the preceding claims, **characterized in that** the magnetization element (22, 24) is formed at least partly by a magnetic coil (26, 28).

5. Auxiliary handle device according to one of the preceding claims, **characterized in that** the magnetization element (22, 24) at least partly surrounds the rheological damping medium (18).

6. Portable power tool, in particular an angle grinder, comprising a main handle (52) and an auxiliary handle device (10) according to one of the preceding claims.

## Revendications

1. Dispositif de poignée auxiliaire, en particulier pour une machine-outil à main (12), comprenant une poignée auxiliaire (14) et une unité d'amortissement (16) avec au moins un moyen d'amortissement (18), le moyen d'amortissement (18) étant formé au moins en partie par un moyen d'amortissement rhéologique (18) et l'unité d'amortissement (16) présentant au moins un élément de magnétisation (22, 24), **caractérisé en ce qu'**un élément d'ajustement (36) est prévu pour l'adaptation au moins en partie automatique d'un champ magnétique de l'au moins un élément de magnétisation (22, 24) à une grandeur caractéristique de vibration.

2. Dispositif de poignée auxiliaire selon la revendication 1, **caractérisé en ce que** le moyen d'amortissement rhéologique (18) est formé au moins en partie par un moyen d'amortissement magnéto-rhéologique (18).

3. Dispositif de poignée auxiliaire selon l'une quelconque des revendications précédentes, **caractérisé en ce que** le moyen d'amortissement rhéologique (18) est formé au moins en partie par un liquide d'amortissement magnéto-rhéologique (20).

4. Dispositif de poignée auxiliaire selon l'une quelconque des revendications précédentes, **caractérisé en ce que** l'élément de magnétisation (22, 24) est formé au moins en partie par une bobine magnétique (26, 28).

5. Dispositif de poignée auxiliaire selon l'une quelconque des revendications précédentes, **caractérisé en ce que** l'élément de magnétisation (22, 24) entoure au moins en partie le moyen d'amortissement rhéologique (18).

6. Machine-outil à main, en particulier meuleuse d'angle, comprenant une poignée principale (52) et un dispositif de poignée auxiliaire (10) selon l'une quelconque des revendications précédentes.
